(19) **Europäisches Patentamt / European Patent Office / Office européen des brevets**

(11) **EP 4 692 545 A1**

(12) **EUROPEAN PATENT APPLICATION**
published in accordance with Art. 153(4) EPC

(43) Date of publication:
**11.02.2026 Bulletin 2026/07**

(21) Application number: **23930887.7**

(22) Date of filing: **07.12.2023**

(51) International Patent Classification (IPC):
**F04B 49/10** (2006.01)    **F04B 51/00** (2006.01)

(52) Cooperative Patent Classification (CPC):
**F04B 49/10; F04B 51/00**

(86) International application number:
**PCT/JP2023/043889**

(87) International publication number:
**WO 2024/202262 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.03.2023 JP 2023051287**

(71) Applicant: **Hitachi Construction Machinery Co.,
Ltd.
Tokyo 110-0015 (JP)**

(72) Inventors:
• **UDAGAWA, Tsutomu**
  **Tsuchiura-shi, Ibaraki 300-0013 (JP)**
• **YAMAMOTO, Junji**
  **Tsuchiura-shi, Ibaraki 300-0013 (JP)**
• **KOMAKI, Mayuki**
  **Tsuchiura-shi, Ibaraki 300-0013 (JP)**
• **KUNIOKA, Shogo**
  **Tsuchiura-shi, Ibaraki 300-0013 (JP)**

(74) Representative: **MERH-IP Matias Erny Reichl
Hoffmann
Patentanwälte PartG mbB
Paul-Heyse-Straße 29
80336 München (DE)**

(54) **HYDRAULIC PUMP STATE MONITORING DEVICE AND HYDRAULIC DRIVE DEVICE**

(57)    An object of the present invention is to provide a hydraulic pump state monitoring device that enables diagnosis of a hydraulic pump based on force conversion efficiency from input of the hydraulic pump to output thereof by measuring a feature amount relating to the force conversion efficiency. Accordingly, a controller computes, in a case in which the tilting amount of the hydraulic pump has become a predetermined tilting amount and the delivery pressure has become a predetermined pressure, a feature amount relating to the force conversion efficiency that is the efficiency of conversion from a rotational force of a prime mover to the delivery pressure of a hydraulic operating fluid concerning the hydraulic pump at a time when the delivery pressure of the hydraulic pump has become the predetermined pressure.

[Fig. 4]

EP 4 692 545 A1

## Description

Technical Field

The present invention relates to a device that monitors a state of a hydraulic pump extensively used as a power source for a hydraulic excavator, a crane, and other various hydraulic machines and hydraulic devices.

Background Art

For example, Patent Documents 1 to 3 are provided as prior art documents relating to a device that monitors a state of a hydraulic pump. Patent Document 1 describes a construction machine including a prime mover, a tank that stores a hydraulic operating fluid, a single-tilt variable displacement first hydraulic pump that is driven by the prime mover to deliver the hydraulic operating fluid sucked from the tank, a plurality of hydraulic actuators driven by the hydraulic operating fluid supplied from the first hydraulic pump, an operation device to make an instruction of operation of the plurality of actuators, and a controller that controls revolution speed of the prime mover and tilting of the first hydraulic pump. This construction machine includes a first pressure sensor that senses the pressure of the first hydraulic pump, a first bleed-off adjustment device capable of adjusting the bleed-off flow rate of the first hydraulic pump, and an input device to make an instruction of measurement of the leakage flow rate of the first hydraulic pump. The controller is connected to the operation device, the first pressure sensor, the first bleed-off adjustment device, and the input device, and is programmed to be capable of determining an operation state of the operation device based on an input signal from the operation device, converting a sensing signal of the first pressure sensor to a pressure value, and outputting a control signal according to a control command value to the first bleed-off adjustment device. In a case in which the controller determines that the operation device is in a non-operated state and a measurement command has been input from the input device, the controller measures, in a state in which the flow rate of the first hydraulic pump is kept, the pressure of the first hydraulic pump while changing the control command value of the first bleed-off adjustment device, and computes the leakage flow rate of the first hydraulic pump based on the control command value of the first bleed-off adjustment device when the pressure of the first hydraulic pump is stabled at a predetermined pressure.

Prior Art Document

Patent Document

Patent Document 1: JP-2021-95861-A

Summary of the Invention

Problem to be Solved by the Invention

The hydraulic pump outputs input power from the prime mover as a form of the delivery flow rate and the delivery pressure of the hydraulic operating fluid. If a gap (clearance) between components inside the pump becomes larger, the delivery flow rate decreases in association with increase in the leakage flow rate inside the pump. Meanwhile, if a friction force between sliding components inside the pump becomes larger, the delivery pressure lowers in association with increase in a resistive force against a rotational force (torque) of the prime mover. Thus, it is conceivable that indexes of speed conversion efficiency (volumetric efficiency) from the input to the output of the hydraulic pump and force conversion efficiency (mechanical efficiency) from the input to the output of the hydraulic pump are introduced and diagnosis of the hydraulic pump is executed based on these indexes.

However, with the method described in Patent Document 1, the diagnosis based on the force conversion efficiency cannot be executed although the diagnosis based on the speed conversion efficiency is enabled by measuring the leakage flow rate of the hydraulic pump.

The present invention has been made in view of the above-described problem, and an object thereof is to provide a hydraulic pump state monitoring device that enables diagnosis of a hydraulic pump based on force conversion efficiency from the input to the output of the hydraulic pump by measuring a feature amount relating to the force conversion efficiency.

Means for Solving the Problem

In order to achieve the above-described object, the present invention provides a hydraulic pump state monitoring device that monitors a state of a variable displacement hydraulic pump that is driven by rotation of a prime mover to deliver a hydraulic operating fluid with capacity according to a tilting amount. The hydraulic pump state monitoring device includes a controller that acquires information relating to a rotational force of the prime mover, the tilting amount of the hydraulic pump, and delivery pressure of the hydraulic operating fluid concerning the hydraulic pump and has a computation function for monitoring the state of the hydraulic pump. The controller is configured to compute, in a case in which the tilting amount of the hydraulic pump has become a predetermined tilting amount and the relevant delivery pressure has become a predetermined pressure, a feature amount relating to force conversion efficiency that is efficiency of conversion from the rotational force of the prime mover to the delivery pressure of the hydraulic operating fluid concerning the hydraulic pump at a time when the delivery pressure of the hydraulic pump has become the predetermined pressure.

Further, the present invention provides a hydraulic drive system including a prime mover, a tank that stores a hydraulic operating fluid, a variable displacement hydraulic pump driven by rotation of the prime mover to suck the hydraulic operating fluid in the tank and deliver the hydraulic operating fluid with capacity according to a tilting amount, and a controller that acquires information relating to a rotational force of the prime mover, the tilting amount of the hydraulic pump, and delivery pressure of the hydraulic operating fluid concerning the hydraulic pump and controls the tilting amount of the hydraulic pump. The hydraulic drive system includes a pressure sensor that senses the delivery pressure of the hydraulic pump. The controller is configured to compute, in a case in which the controller has controlled the tilting amount of the hydraulic pump to a predetermined tilting amount and the delivery pressure of the hydraulic pump sensed by the pressure sensor has become a predetermined pressure, a feature amount relating to force conversion efficiency that is efficiency of conversion from the rotational force of the prime mover to the delivery pressure of the hydraulic operating fluid concerning the hydraulic pump.

Advantages of the Invention

According to the present invention, measuring the feature amount relating to the force conversion efficiency from the input to the output of the hydraulic pump enables diagnosis of the hydraulic pump based on the force conversion efficiency.

Brief Description of the Drawings

[Fig. 1] Fig. 1 is a side view of a hydraulic excavator in a first embodiment of the present invention.
[Fig. 2] Fig. 2 is a schematic configuration diagram of a hydraulic drive system in the first embodiment of the present invention.
[Fig. 3] Fig. 3 is a structural diagram of a variable displacement bent axis hydraulic pump.
[Fig. 4] Fig. 4 is a functional block diagram of a controller in the first embodiment of the present invention.
[Fig. 5] Fig. 5 is a flowchart depicting processing executed by the controller in the first embodiment of the present invention.
[Fig. 6] Fig. 6 is a diagram depicting processing executed by an analysis server in the first embodiment (modification) of the present invention.
[Fig. 7] Fig. 7 is a schematic configuration diagram of the hydraulic drive system in the first embodiment (modification) of the present invention.
[Fig. 8] Fig. 8 is a schematic configuration diagram of the hydraulic drive system in a second embodiment of the present invention.
[Fig. 9] Fig. 9 is a functional block diagram of the controller in the second embodiment of the present invention.
[Fig. 10] Fig. 10 is a functional block diagram of the controller in a third embodiment of the present invention.
[Fig. 11] Fig. 11 is a flowchart depicting processing executed by the controller in the third embodiment of the present invention.
[Fig. 12] Fig. 12 is a schematic configuration diagram of the hydraulic drive system in a fourth embodiment of the present invention.

Modes for Carrying Out the Invention

Embodiments of the present invention are described below with reference to the drawings. In the respective diagrams, an equivalent component is given the same reference sign, and overlapping description is omitted as appropriate. The present invention can be applied to a hydraulic excavator, a crane, and other various hydraulic machines and hydraulic devices. These embodiments are an example in which the present invention is applied to a hydraulic excavator.

[First Embodiment]

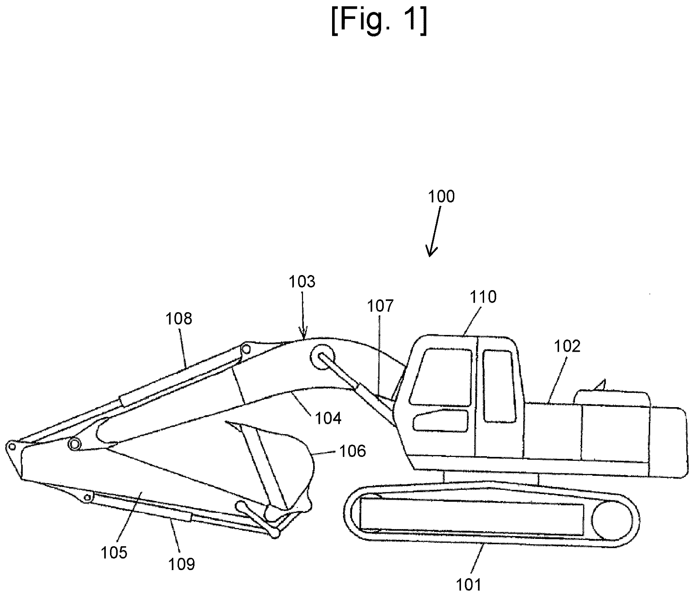

Fig. 1 is a side view of a hydraulic excavator in a first embodiment of the present invention. A hydraulic excavator 100 includes a track structure 101, a swing structure 102 swingably attached onto the track structure 101, and a work device 103 attached to the front side of the swing structure 102 pivotally in an upward-downward direction.

The work device 103 includes a boom 104 attached to the front side of the swing structure 102 pivotally in the upward-downward direction, an arm 105 attached to a tip portion of the boom 104 pivotally in the upward-downward or front-rear direction, and a bucket 106 attached to a tip portion of the arm 105 pivotally in the upward-downward or front-rear direction. The boom 104 is driven by a boom cylinder 107 that is a hydraulic actuator. The arm 105 is driven by an arm cylinder 108 that is a hydraulic actuator. The bucket 106 is driven by a bucket cylinder 109 that is a hydraulic actuator. A cab 110 in which an operator rides is disposed at a front-side position on the swing structure 102.

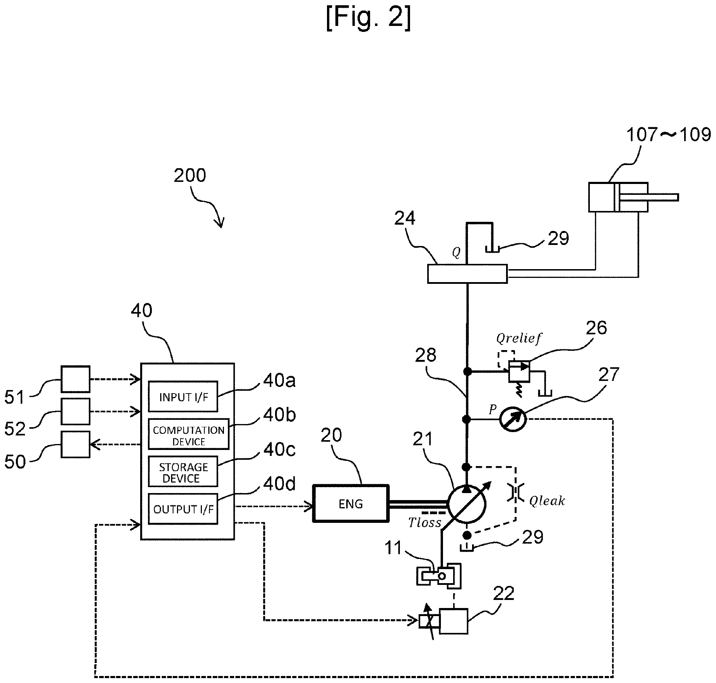

Fig. 2 is a diagram depicting a schematic configuration of a hydraulic drive system mounted in the hydraulic excavator 100. A hydraulic drive system 200 includes an engine 20 as a prime mover, a single-tilt variable displacement hydraulic pump 21 driven by the engine 20, a hydraulic pilot type tilting mechanism 11 that controls a pump tilting amount q of the hydraulic pump 21, and a solenoid proportional valve 22 that outputs, to the tilting mechanism 11, a pilot pressure generated by reducing a primary pressure from a pilot hydraulic fluid source (not depicted). The hydraulic drive system 200 includes also the hydraulic actuators 107 to 109, an operation lever 51 to make an instruction of action of the hydraulic actuators 107 to 109, a measurement instruction device 52, a directional control valve unit 24, a relief valve 26, a pressure sensor 27, a monitor 50, the engine 20, the solenoid proportional valve 22, and a controller 40.

The directional control valve unit 24 is connected to a pump delivery hydraulic line 28 connected to a delivery port of the hydraulic pump 21, and controls the flow of a hydraulic fluid supplied from the hydraulic pump 21 to the hydraulic actuators 107 to 109 according to operation of the operation lever 51. The relief valve 26 is a safety valve that limits the pressure of the pump delivery hydraulic line 28. When the pressure of the pump delivery hydraulic line 28 (= pump pressure P) exceeds a relief set pressure Pr, the relief valve 26 opens to discharge the hydraulic fluid of the pump delivery hydraulic line 28 to a tank 29. The pressure sensor 27 is disposed on the pump delivery hydraulic line 28, and converts the pressure of the pump delivery hydraulic line 28 (= pump pressure P) to a pressure signal to output the pressure signal to the controller 40.

The controller 40 includes an input interface 40a to which a signal from each piece of equipment is input, a computation device 40b that is composed of a central processing unit (CPU), a peripheral circuit thereof, and the like and that executes various computations according to a predetermined program, a storage device 40c that stores programs and various kinds of data, and an output interface 40d that outputs a control signal to each piece of equipment. The controller 40 controls the engine 20, the tilting mechanism 11, the monitor 50, and the like according to an input signal from the operation lever 51, the pressure signal from the pressure sensor 27, and a measurement command from the measurement instruction device 52.

A pump of an axial piston type is frequently used as a hydraulic pump mounted in a construction machine such as a hydraulic excavator, and a bent axis type and a swash plate type are provided as a variable displacement mechanism. Both types achieve variable displacement by changing a stroke process of a piston to change the displacement volume.

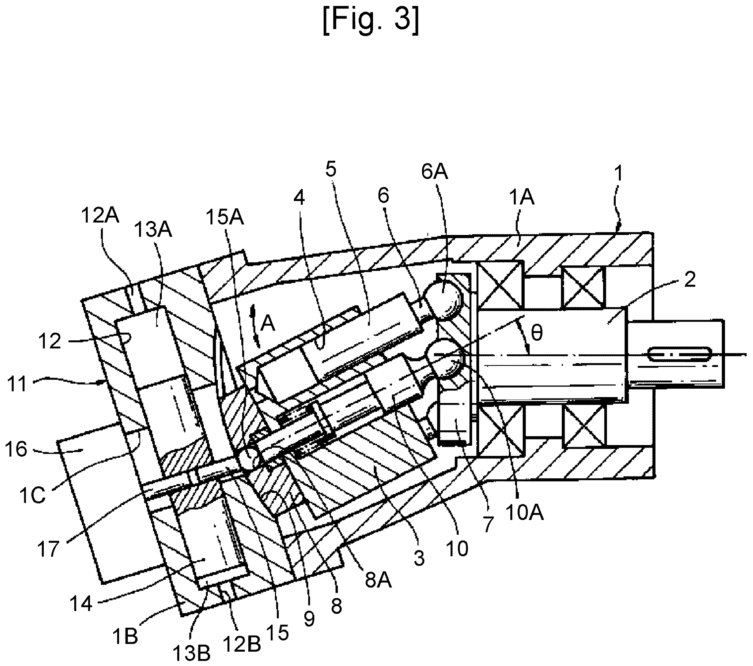

As an example of a single-tilt variable displacement hydraulic pump, a structure of a variable displacement bent axis hydraulic pump is depicted in Fig. 3. A casing 1 of the hydraulic pump is composed of a casing body 1A of a substantially circular cylindrical shape that has a bearing portion on one end side thereof and a head casing 1B which closes the other end side of the casing body 1A. A rotating shaft 2 is rotatably disposed in the casing body 1A. A cylinder block 3 is located in the casing body 1A, and rotates together with the rotating shaft 2.

A plurality of cylinders 4 are drilled in the cylinder block 3 along the axial direction thereof. Pistons 5 are each slidably disposed in a corresponding one of the cylinders 4, and a connecting rod 6 is attached to each piston 5. A spherical portion 6A is formed at the tip of each connecting rod 6. Each spherical portion 6A is swingably supported by a drive disc 7 formed at the tip of the rotating shaft 2. The cylinder block 3 is disposed with a tilting angle $\theta$ with respect to the rotating shaft 2 together with a valve plate 8 to be described later, and the pump displacement volume (pump tilting amount) is determined by this tilting angle $\theta$.

The cylinder block 3 is in slide contact with one side end face of the valve plate 8. The other side end face of the valve plate 8 is in slide contact with a tilting sliding face 9 of a concave curved shape that is formed in the head casing 1B. A through-hole 8A is drilled at the center of the valve plate 8. The respective tip portions of a center shaft 10 and a swing pin 15 to be described later are each inserted into the through-hole 8A from both sides. A pair of supply/discharge ports (not depicted) that intermittently communicate with each cylinder 4 during rotation of the cylinder block 3 are drilled in the valve plate 8. A pair of supply/discharge passages (not depicted) opened in the tilting sliding face 9 of the head casing 1B communicate with these supply/discharge ports irrespective of the tilting position (tilting angle $\theta$) of the valve plate 8.

The center shaft 10 supports the cylinder block 3 between the drive disc 7 and the valve plate 8. A spherical portion 10A is formed on one end side of the center shaft 10. The spherical portion 10A is swingably supported at the axial center position of the drive disc 7. Meanwhile, the other end side of the center shaft 10 that protrudes through penetration through the center of the cylinder block 3 is slidably inserted into the through-hole 8A of the valve plate 8. This causes centering of the cylinder block 3 with respect to the valve plate 8.

The tilting mechanism 11 tilts the valve plate 8 along the tilting sliding face 9. The tilting mechanism 11 includes a cylinder chamber 12 that is formed in the head casing 1B and has fluid passing holes 12A and 12B on both end sides in the axial direction, a servo piston 14 that is slidably inserted and fitted into the cylinder chamber 12 and defines liquid pressure chambers 13A and 13B in the cylinder chamber 12, and the swing pin 15 having the base end side anchored to the servo piston 14 and the tip side that is formed into a spherical tip portion 15A and is swingably inserted and fitted into the through-hole 8A of the valve plate 8.

A control portion 16 executes tilting control of the valve plate 8 through the tilting mechanism 11. The control portion 16 is disposed outside the head casing 1B, and includes a restrictor selector valve that executes feedback control of the amount of hydraulic fluid (pilot pressure) supplied or discharged from or to a pilot pump (neither is depicted). Further, this restrictor selector valve is provided with a sleeve (not depicted). This sleeve and the servo piston 14 are integrally joined by a feedback pin 17 inserted into an elongated hole 1C of the head casing 1B.

When switching operation of the restrictor selector valve of the control portion 16 is executed by an operation lever or the like, the hydraulic fluid (pilot pressure) depending on the amount of switching operation at the time is supplied from the pilot pump into and discharged from the liquid pressure chamber 13A or 13B of the tilting mechanism 11 through the fluid passing hole 12A or 12B, and the servo piston 14 is slid and displaced by the pressure difference between the liquid pressure chambers 13A and 13B. This causes the servo piston 14 to tilt, through the swing pin 15, the valve plate 8 and the cylinder block 3 in direction indicated by arrows A with the tilting angle θ. Moreover, the sleeve of the restrictor selector valve is displaced in such a manner as to follow the displacement of the servo piston 14, to thereby execute feedback control of the amount of hydraulic fluid from the pilot pump and keep the displacement amount of the servo piston 14 in a state in which the displacement amount is made to correspond to the amount of switching operation of the restrictor selector valve.

In the variable displacement hydraulic pump of the axial piston type including such a configuration, the delivery flow rate of the pump can be changed by changing the tilt amount (tilting angle θ) of the bent axis or the swash plate to increase or decrease the displacement amount of the piston per one revolution.

Next, loss caused in the hydraulic pump is described. As major movable portions and sliding portions of the pump, as described above, the bearing, the sliding portion between each piston 5 and the corresponding cylinder 4, the sliding portion between the cylinder block 3 and the valve plate 8, the sliding portion between the valve plate 8 and the head casing 1B, and the like are given. The delivered fluid from the pump is transferred from this cylinder block 3 to a delivery port (not depicted) via the valve plate 8. If poor lubrication or the like occurs in sliding of these sliding portions, wear or the like occurs, and the gap of the tilting sliding face becomes large. This gap is added, and the clearance between components becomes larger than a defined amount in normal times. Accordingly, the delivered fluid of the pump flows out (leaks) from the gap to a low-pressure portion. As a result, the delivery flow rate of the pump decreases from the delivery flow rate in normal times by the leakage flow rate. Further, if a friction force increases at the above-described sliding portion due to seizing, wear, poor lubrication, or the like, a force acting in such a direction as to interfere with pump action becomes large, and the hydraulic pressure correspondingly decreases.

Here, power (work rate [J/s = W]) and efficiency of the hydraulic pump 21 are described.

Rotational power Pwr_e input to the hydraulic pump 21 is represented by the following formula.

$$\text{Pwr\_e} = \text{Te} \times \text{Ne}/60 \times 2\pi \cdots (1)$$

Te [N-m]: engine torque
Ne [rpm]: engine speed

Hydraulic power Pwe_p output from the hydraulic pump 21 is represented by the following formula.

$$\text{Pwr\_p} = \text{P} \times \text{Q}/60 \times 1000 \cdots (2)$$

P [MPa]: delivery pressure of hydraulic pump 21
Q [L/min]: delivery flow rate of hydraulic pump 21

Overall efficiency η of the hydraulic pump 21 is represented by the following formula.

$$\eta = \text{Pwr\_p}/\text{Pwr\_e} \times 100 \cdots (3)$$

Here, because the power is represented by the product of the force and the speed, the overall efficiency η can be represented as follows.

$$\eta = \eta m \times \eta v \quad \cdots \quad (4)$$

ηm: force conversion efficiency
ηv: speed conversion efficiency

The force conversion efficiency ηm means the transmission efficiency of the force (mechanical efficiency) from the input to the output of the hydraulic pump 21, and means, in the present embodiment, the efficiency of conversion from the rotational force of the engine 20 (prime mover) to the delivery pressure of the hydraulic operating fluid concerning the hydraulic pump 21. Further, the speed conversion efficiency ηv means the transmission efficiency of the speed (volumetric efficiency) from the input to the output of the hydraulic pump 21, and means, in the present embodiment, the efficiency of conversion from the revolution speed of the engine 20 (prime mover) to the delivery flow rate of the hydraulic operating fluid concerning the hydraulic pump 21. That is, the force conversion efficiency ηm lowers when output lowering relating to the "force" occurs in the process from the input to the output, and the speed conversion efficiency ηv lowers when output lowering relating to the "speed" occurs.

Meanwhile, the force conversion efficiency ηm is represented by the following formula.

$$\eta m = Tp/Te \quad \cdots \quad (5)$$

Tp [N·m]: reaction torque received from hydraulic fluid

The reaction torque Tp is obtained by the following formula.

$$Tp = \Delta P \times q/2\pi \times 1000 \quad \cdots \quad (6)$$

ΔP [MPa]: pump differential pressure (= pump pressure P - tank pressure ($\approx 0$))
q [cm$^3$/rev]: pump tilting amount

Here, a feature amount relating to the force conversion efficiency ηm is a parameter required for computation of the force conversion efficiency ηm. The engine torque (rotational force of the prime mover) Te, the pump tilting amount q, the pump pressure (delivery pressure of the hydraulic operating fluid) P, and the like correspond to this feature amount.

The conventional art enables diagnosis of a hydraulic pump based on the speed conversion efficiency ηv by measuring a leakage flow rate Qleak of the hydraulic pump as a feature amount relating to the speed conversion efficiency ηv. In contrast, the present embodiment enables diagnosis of the hydraulic pump 21 based on the force conversion efficiency ηm by measuring the feature amounts Te, q, and P relating to the force conversion efficiency ηm.

Here, a mention is made concerning a factor in the lowering of the force conversion efficiency ηm. An equation of motion relating to rotational motion of the hydraulic pump 21 is as follows.

$$Jd^2\theta/dt^2 = Te - Tp - Tloss \quad \cdots \quad (7)$$

J: moment of inertia around rotating shaft of hydraulic pump 21
θ: rotation angle of rotating shaft of hydraulic pump 21
Te: engine torque
Tp: reaction torque
Tloss: loss torque

In operation action in which the rotational angular velocity is constant ($d^2\theta/dt^2 = 0$), the left side of Formula (7) becomes 0. Accordingly, the loss torque Tloss can be represented as follows.

$$Tloss = Te - Tp \quad \cdots \quad (8)$$

When the reaction torque Tp in Formula (8) is deleted by use of Formula (5), the loss torque Tloss can be represented as follows.

$$Tloss = Te \times (1 - \eta m) \quad \cdots \quad (9)$$

The loss torque Tloss changes depending on a sliding resistance force of the sliding portions inside the pump, a rolling resistance force of a rolling rotational portion inside the pump, a hydraulic stirring resistance force during pump operation, and the like. As is apparent from Formula (9), the force conversion efficiency ηm lowers when the loss torque Tloss increases. Hence, monitoring the force conversion efficiency ηm enables detection of the increase in the loss torque Tloss.

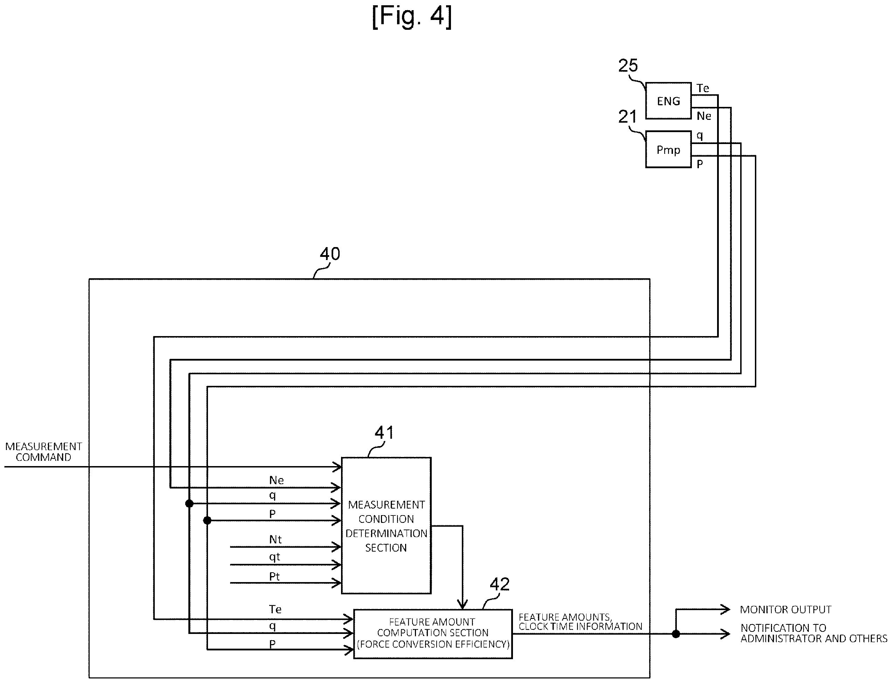

Fig. 4 is a functional block diagram of the controller 40 in the first embodiment. The controller 40 in the present embodiment includes a measurement condition determination section 41 and a feature amount computation section 42. The controller 40 includes a processer such as a CPU, a storage device such as a ROM and a RAM, an input/output interface that executes signal input and output between the controller 40 and external equipment, and implements functions of the respective sections by executing the programs stored in the storage device. In Fig. 4, only functions relating to measurement of the feature amounts Te, q, and P relating to the force conversion efficiency ηm of the hydraulic pump 21 are indicated, and functions relating to driving of the hydraulic actuators 107 to 109, and the like, are omitted.

The measurement condition determination section 41 receives the measurement command from the measurement instruction device 52, and determines whether or not a measurement condition of the feature amounts Te, q, and P is established. When determining that the measurement condition is established, the measurement condition determination section 41 instructs the feature amount computation section 42 to compute the feature amounts Te, q, and P. The measurement instruction device 52 may be newly added to the machine body, or a timer included in the machine body, external equipment that can communicate with the controller 40, or the like may be diverted. It is assumed that the measurement condition in the present embodiment is that the engine speed Ne falls within a range of a target engine speed Nt ± tolerance and the pump tilting amount q falls within a range of a target pump tilting amount qt ± tolerance and the pump pressure P falls within a range of a target pump pressure Pt ± tolerance. Therefore, variation in the measurement condition can be suppressed by setting these tolerances to small values.

The feature amount computation section 42 receives the instruction from the measurement condition determination section 41, and computes the respective representative values of the engine torque Te, the pump tilting amount q, and the pump pressure P as the feature amounts Te, q, and P. The feature amount computation section 42 stores the computed feature amounts Te, q, and P together with clock time information in the storage device 40c, outputs them to the monitor 50 disposed in the cab 110, or the like, and notifies a machine administrator, a service sector, and others, through wireless communication or the like of them.

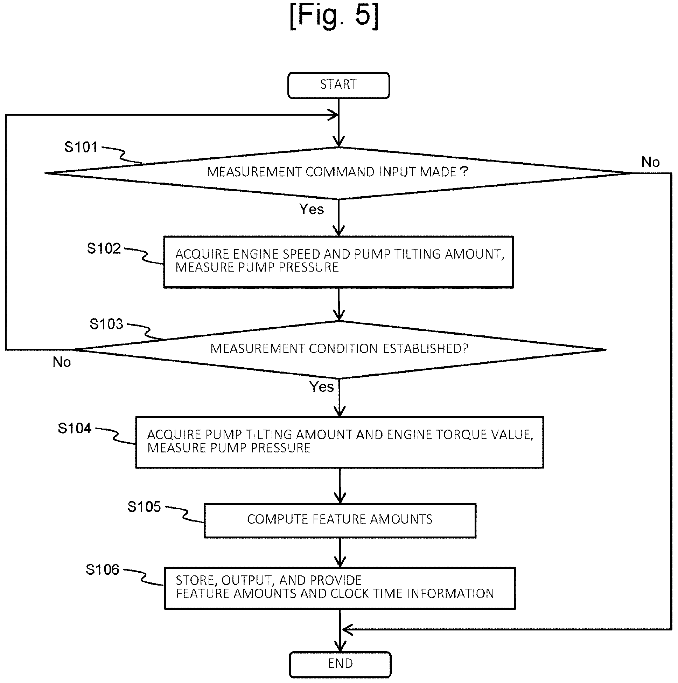

Fig. 5 is a flowchart depicting processing executed by the controller 40 in the first embodiment. Each step is sequentially described below.

First, the controller 40 determines whether or not an input of the measurement command has been made (step S101).

When the determination result of the step S101 is No, this flow is ended.

When the determination result of the step S101 is Yes, the engine speed Ne and the pump tilting amount q are acquired, and the pump pressure P is measured (step S102).

Subsequently to the step S102, the controller 40 determines whether or not the measurement condition of the feature amounts Te, q, and P is established (step S103).

When the determination result of the step S103 is No, the processing is returned to the step S101.

When the determination result of the step S103 is Yes, the engine torque Te and the pump tilting amount q are acquired, and the pump pressure P is measured (step S104).

Subsequently to the step S104, the controller 40 computes the respective representative values of the engine torque Te, the pump tilting amount q, and the pump pressure P as the feature amounts Te, q, and P (step S105). As a computation method for the representative values, a method in which measurement values of the most recent multiple times of measurement are averaged, a method in which measurement values are smoothed by a low-pass filter, and the like are conceivable. However, the computation method is not limited to them.

Subsequently to the step S105, the feature amounts Te, q, and P and the clock time information are stored in the storage device 40c, and are output to the monitor 50 or the like, and the machine administrator, the service sector, and others are notified of the feature amounts Te, q, and P and the clock time information, through wireless communication or the like (step S106), and this flow is ended.

(Summarization)

In the first embodiment, the hydraulic pump state monitoring device, which monitors a state of the variable displacement hydraulic pump 21 that is driven by rotation of the prime mover 20 to deliver the hydraulic operating fluid with capacity according to the tilting amount q, includes the controller 40 that acquires information relating to the rotational force Te of the prime mover 20, the tilting amount q of the hydraulic pump 21, and the delivery pressure P of the hydraulic operating fluid concerning the hydraulic pump 21 and that has the computation function for monitoring the state of the hydraulic pump 21. The controller 40 measures, in a case where the tilting amount q of the hydraulic pump 21 has become the predetermined tilting amount qt and the delivery pressure P has become the predetermined pressure Pt, the feature amounts Te, q, and P relating to the force conversion efficiency ηm that is the efficiency of conversion from the rotational force Te of the prime mover 20 to the delivery pressure P of the hydraulic operating fluid concerning the hydraulic pump 21 at a time when the delivery pressure P of the hydraulic pump 21 has become the predetermined pressure Pt.

Further, in the first embodiment, the hydraulic drive system 200, which includes the prime mover 20, the tank 29 that stores the hydraulic operating fluid, the variable displacement hydraulic pump 21 driven by rotation of the prime mover 20 to suck the hydraulic operating fluid in the tank 29 and deliver the hydraulic operating fluid with capacity according to the tilting amount q, and the controller 40 that acquires information relating to the rotational force Te of the prime mover 20 and the tilting amount q and the delivery pressure P of the hydraulic operating fluid concerning the hydraulic pump 21 and that controls the tilting amount q of the hydraulic pump 21, includes the pressure sensor 27 that senses the delivery pressure of the hydraulic pump 21. The controller 40 computes the feature amounts Te, q, and P relating to the force conversion efficiency ηm that is the efficiency of conversion from the rotational force Te of the prime mover 20 to the delivery pressure P of the hydraulic operating fluid concerning the hydraulic pump 21 in a case in which the controller 40 has controlled the tilting amount q of the hydraulic pump 21 to the predetermined tilting amount qt and the delivery pressure P of the hydraulic pump 21 sensed by the pressure sensor 27 has become the predetermined pressure Pt.

According to the first embodiment configured as described above, the feature amounts Te, q, and P relating to the force conversion efficiency ηm are measured when the operating state of the hydraulic pump 21 satisfies the desired measurement condition. Accordingly, diagnosis of the hydraulic pump 21 based on the force conversion efficiency ηm is enabled. The number of measurement conditions of the feature amounts Te, q, and P is not limited to one, and a plurality of measurement conditions may be set. For example, the following operation actions are provided as main operation actions of the hydraulic excavator 100: high-output-power operation action in excavation work (high engine speed Ne, high pump pressure P, and large pump tilting amount q); middle-output-power operation action in ground leveling work or the like (substantially middle engine speed Ne, substantially middle pump pressure P, and substantially middle pump tilting amount q); and low-output-power operation action in slow speed work or the like (middle engine speed Ne, low pump pressure P, and small pump tilting amount q). Setting measurement conditions corresponding to these operation actions enables proper diagnosis of the hydraulic pump 21 mounted in the hydraulic excavator 100.

Moreover, the feature amounts Te, q, and P in the first embodiment include the rotational force Te of the prime mover 20, the tilting amount q of the hydraulic pump, and the delivery pressure P of the hydraulic pump 21. Due to this, diagnosis of the hydraulic pump 21 based on the force conversion efficiency ηm is enabled by measuring the rotational force Te of the prime mover 20, the tilting amount q of the hydraulic pump 21, and the delivery pressure P of the hydraulic pump 21.

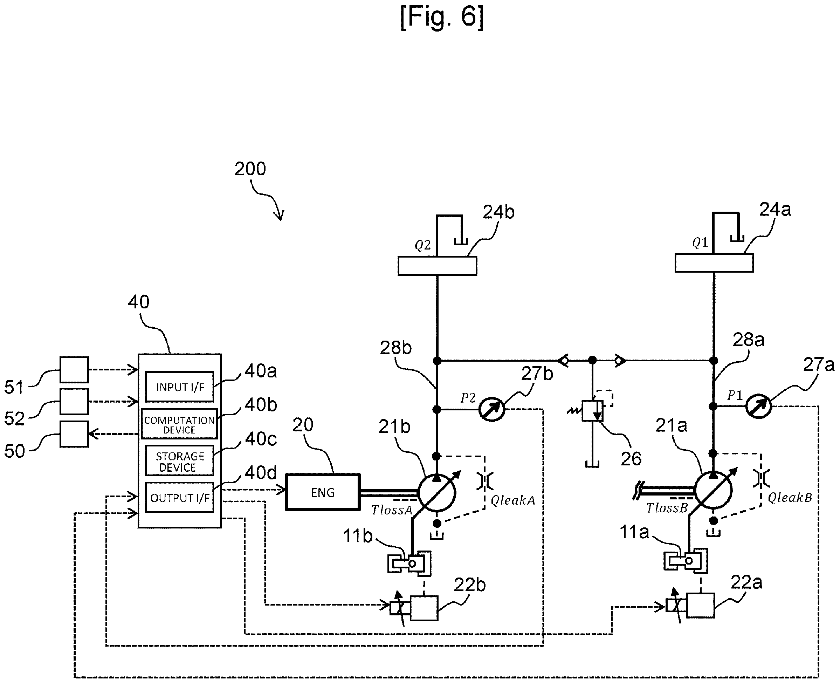

In the present embodiment, the configuration in which one hydraulic pump 21 is driven by one engine 20 has been described. However, it is general that a plurality of hydraulic pumps be mounted in a construction machine. A schematic configuration of the hydraulic drive system 200 including two hydraulic pumps is depicted in Fig. 6. In this configuration, two hydraulic pumps 21a and 21a are driven by one engine 20. In this case, the hydraulic power Pwr_p output from the hydraulic pumps 21a and 21a is the sum of the hydraulic power output from each hydraulic pump, and can be computed as follows.

$$\begin{aligned} \text{Pwr\_p} &= \text{P} \times \text{Q} \\ &= \text{P1} \times \text{Q1} + \text{P2} \times \text{Q2} \\ &= \text{Ne} \times (\text{P1} \times \text{q1} + \text{P2} \times \text{q2}) \quad \cdots \quad (10) \end{aligned}$$

P1: delivery pressure of hydraulic pump 21a
P2: delivery pressure of hydraulic pump 21b
Q1: delivery flow rate of hydraulic pump 21a
Q2: delivery flow rate of hydraulic pump 21b
q1: tilting amount of hydraulic pump 21a
q2: tilting amount of hydraulic pump 21b

Accordingly, also in the hydraulic drive system including the plurality of hydraulic pumps, diagnosis of the hydraulic pumps based on the force conversion efficiency ηm is enabled similarly to the hydraulic drive system including one hydraulic pump.

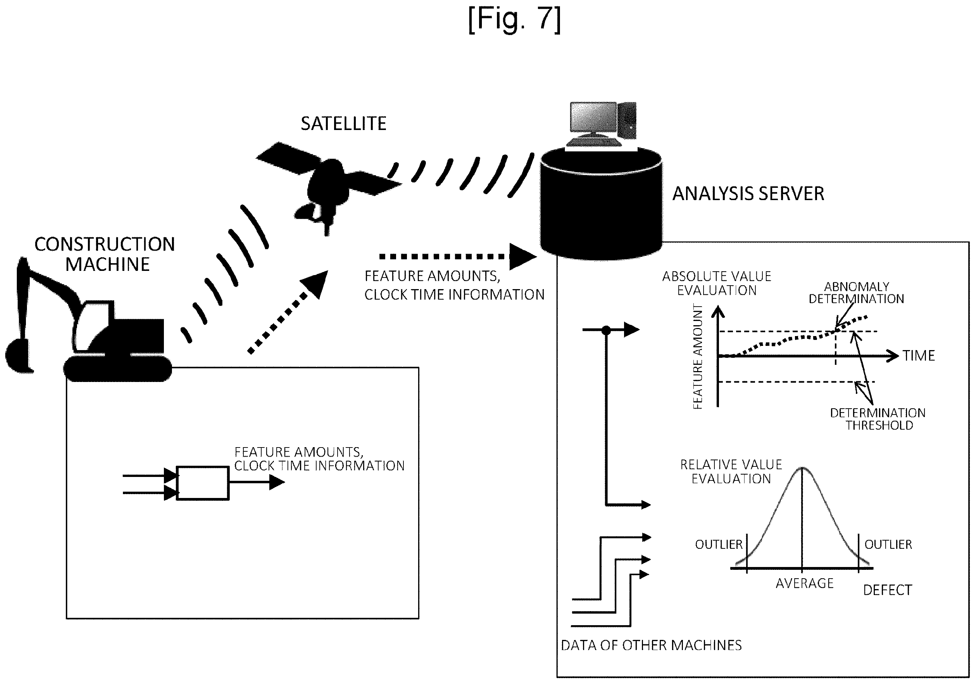

Further, in the present embodiment, the configuration is made such that the feature amounts Te, q, and P relating to the force conversion efficiency ηm are computed on the side of the hydraulic excavator 100 and are output to the monitor 50 in the cab 110, or the like, together with the clock time information. However, they may be transferred to an analysis server installed at another site by use of communication means utilizing satellite communication or the like, and diagnosis processing may be executed on the analysis server side. Fig. 7 depicts a configuration example in a case in which diagnosis processing is executed on the analysis server side. In this example, the hydraulic pump 21 is determined to involve an anomaly when the feature amount exceeds a determination threshold. By executing the diagnosis processing on the analysis server side in this manner, a symptom of a defect relating to the lowering of the force conversion efficiency of the hydraulic pump can be grasped also at a remote place. The determination threshold can easily be changed on the analysis server side, and thus, the defect level of the diagnosis can easily be adjusted. For example, the analysis server can collect not only a single piece of data regarding only one machine but also pieces of data regarding a large number of machines of comparison targets (same kind, same class, and the like). Thus, the determination threshold may be decided through relative value comparison of the degree of discrepancy, the degree of deviation, or the like from a population. In this case, the determination threshold can be adjusted to the optimum value while the machine body is operated.

[Second Embodiment]

A second embodiment of the present invention is described with focus on a difference from the above-described embodiment. In the first embodiment, the configuration is made such that the feature amounts Te, q, and P relating to the force conversion efficiency $\eta$m are measured when the operating state of the hydraulic pump 21 satisfies the predetermined measurement condition. However, the construction machine like the hydraulic excavator 100 executes a variety of actions according to operation by an operator, and the operating state of the hydraulic pump 21 varies in response to the actions. Accordingly, it can hardly be expected that the operating state of the hydraulic pump 21 stably satisfies the measurement condition. As a result, there is a possibility that variation is caused in measurement values of the feature amounts Te, q, and P and the reliability of diagnosis of the hydraulic pump 21 based on the force conversion efficiency $\eta$m lowers. The present embodiment achieves such an operating state of the hydraulic pump 21 that the measurement condition of the feature amounts Te, q, and P is stably satisfied.

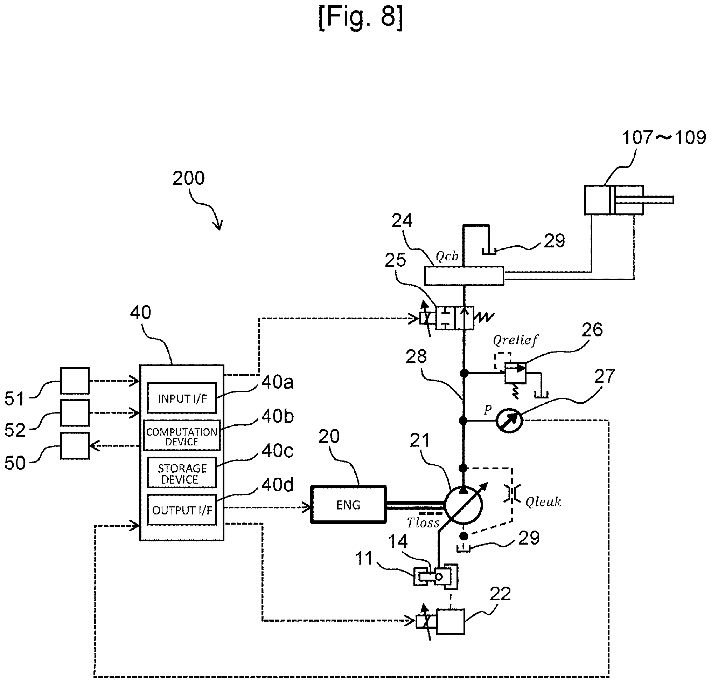

Fig. 8 is a schematic configuration diagram of the hydraulic drive system 200 in the second embodiment. The hydraulic drive system 200 in the present embodiment further includes a bleed-off valve 25 disposed on the pump delivery hydraulic line 28. The bleed-off valve 25 interrupts the flow of the hydraulic operating fluid that is delivered from the pump delivery hydraulic line 28 and is returned to the tank 29 through the directional control valve unit 24, and is disposed on the upstream or downstream side of a control spool (not depicted) in the directional control valve unit 24. In Fig. 8, an example in which the bleed-off valve 25 is disposed on the upstream side of this control spool is depicted. The bleed-off valve 25 is opened or closed according to a control signal from the controller 40 to establish or interrupt communication of the pump delivery hydraulic line 28. The bleed-off valve 25 is frequently configured as a single valve unit referred to as directional flow control valve or the like, together with the directional control valve unit 24 and the relief valve 26.

The controller 40 receives the measurement command from the measurement instruction device 52, and controls an opening area Ab of the bleed-off valve 25, the engine speed Ne, and the pump tilting amount q, and computes the feature amounts Te, q, and P relating to the force conversion efficiency $\eta$m of the hydraulic pump 21 on the basis of the pump pressure P sensed by the pressure sensor 27. Then, the controller 40 causes the feature amounts Te, q, and P to be stored in the storage device 40c, to be output to the monitor 50 or the like, and notifies the machine administrator, the service sector, and others, of them through wireless communication or the like.

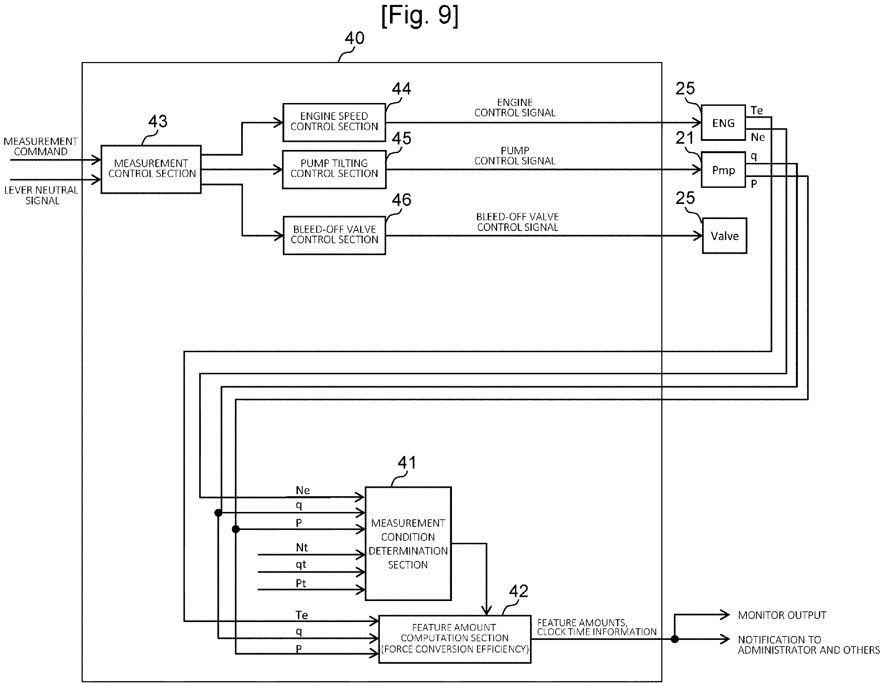

Fig. 9 is a functional block diagram of the controller 40 in the second embodiment. The controller 40 includes a measurement control section 43, an engine speed control section 44, a pump tilting control section 45, and a bleed-off valve control section 46 in addition to the configuration of the first embodiment (depicted in Fig. 4).

The measurement control section 43 receives the measurement command and a lever neutral signal, and outputs commands to the engine speed control section 44, the pump tilting control section 45, and the bleed-off valve control section 46 such that the measurement condition of the feature amounts Te, q, and P is established. The measurement command may be generated through operation of an input device such as a switch disposed in the cab 110, or may be automatically generated immediately after the engine 20 starts and the controller 40 is powered on. In this case, a power signal input from a power supply device (not depicted) of the controller 40 corresponds to the measurement command. The lever neutral signal is a signal generated when the hydraulic actuators 107 to 109 are not being operated, and is generated according to the input signal from the operation lever 51.

The engine speed control section 44 receives the command from the measurement control section 43, and outputs a control signal for causing the engine speed Ne to correspond with the target engine speed Nt. The pump tilting control section 45 receives the command from the measurement control section 43, and outputs a control signal for causing the pump tilting amount q to correspond with the target pump tilting amount qt. The bleed-off valve control section 46 receives the command from the measurement control section 43, and outputs a control signal for closing the bleed-off valve 25. Owing to this, the engine speed Ne becomes constant at the target engine speed Nt, and the pump tilting amount q becomes constant at the target pump tilting amount qt, and the pump pressure P becomes constant at the set pressure of the relief valve 26. Accordingly, the measurement condition of the feature amounts Te, q, and P is stably established.

(Summarization)

The hydraulic drive system 200 in the second embodiment includes the bleed-off valve 25 capable of adjusting the flow rate of the hydraulic operating fluid returned to the tank 29 after being delivered from the hydraulic pump 21, the relief valve 26 that restricts the delivery pressure P of the hydraulic pump 21, and the measurement instruction device 52 that instructs the controller 40 to compute the feature amounts Te, q, and P. The predetermined pressure Pt is the set pressure Pr of the relief valve 26. The controller 40 controls the revolution speed Ne of the prime mover 20 to the predetermined revolution speed Nt and controls the tilting amount q of the hydraulic pump 21 to the predetermined tilting amount qt and closes the bleed-off valve 25 when an instruction from the measurement instruction device 52 has been input to the controller 40.

According to the second embodiment configured as described above, the measurement condition of the feature amounts Te, q, and P can stably be established. Hence, the reliability of diagnosis of the hydraulic pump 21 based on the force conversion efficiency $\eta m$ can be improved.

[Third Embodiment]

A third embodiment of the present invention is described with focus on a difference from the above-described embodiments. In the first and second embodiments, diagnosis of the hydraulic pump 21 based on the force conversion efficiency $\eta m$ is enabled by measuring the feature amounts Te, q, and P relating to the force conversion efficiency $\eta m$. However, diagnosis based on the speed conversion efficiency $\eta v$ is impossible. The present embodiment enables diagnosis of the hydraulic pump 21 based on the force conversion efficiency $\eta m$ and the speed conversion efficiency $\eta v$. A circuit configuration of the hydraulic drive system 200 in the third embodiment is similar to that in the second embodiment (depicted in Fig. 8), and thus, description thereof is omitted.

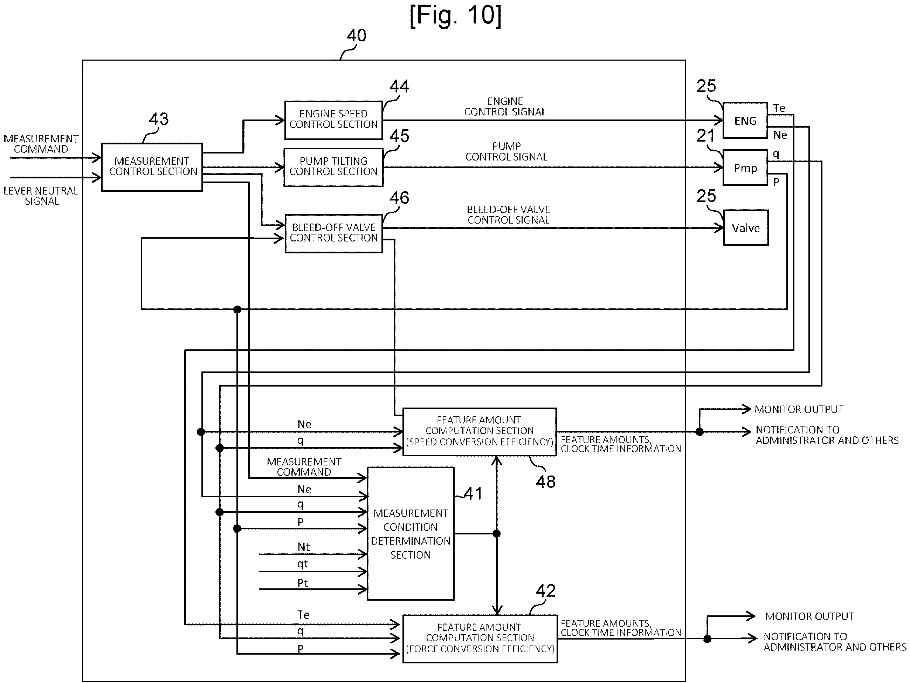

Fig. 10 is a functional block diagram of the controller 40 in the third embodiment. The controller 40 in the present embodiment includes a feature amount computation section 48 that computes a feature amount relating to the speed conversion efficiency $\eta v$ from the input to the output of the hydraulic pump 21 in addition to the configuration of the second embodiment (depicted in Fig. 9).

The speed conversion efficiency $\eta v$ is represented by the following formula.

$$\eta v = Qout/Qin \quad \cdots \quad (11)$$

Qout [L/min]: pump delivery flow rate
Qin [L/min]: pump suction flow rate

The pump suction flow rate Qin is obtained by the following formula.

$$Qin = q \times Ne/1000 \quad \cdots \quad (12)$$

q [cm$^3$/rev]: pump tilting amount
Ne [rpm]: engine speed

The pump delivery flow rate Qout is obtained by the following formula.

$$Qout = Qb = C \times Ab \times \sqrt{(2 \times \Delta Pb/\rho)} \quad \cdots \quad (13)$$

Qb: bleed-off valve passing flow rate
C: coefficient
Ab: bleed-off valve opening area
$\Delta Pb$: differential pressure across bleed-off valve (= pump pressure P - tank pressure ($\approx$ 0))
$\rho$: hydraulic operating fluid density

The feature amount relating to the speed conversion efficiency $\eta v$ is a parameter required for computation of the speed conversion efficiency $\eta v$. The pump tilting amount q, the engine speed Ne, the pump pressure P, the bleed-off valve opening area Ab, and the like correspond to this feature amount.

Here, the leakage flow rate Qleak can be represented as follows.

$$Qleak = Qin - Qout \cdots (14)$$

When the pump delivery flow rate Qout in Formula (14) is deleted by use of Formula (11), the leakage flow rate Qleak can be represented as follows.

$$Qleak = Qin \times (1 - \eta v) \cdots (15)$$

As is apparent from Formula (15), the speed conversion efficiency $\eta v$ lowers when the leakage flow rate Qleak increases. Hence, monitoring the speed conversion efficiency $\eta v$ enables detection of the increase in the leakage flow rate Qleak.

The measurement control section 43 receives the measurement command and the lever neutral signal, and outputs commands to the engine speed control section 44, the pump tilting control section 45, and the bleed-off valve control section 46 such that the measurement condition of the feature amounts Te, q, and P is established. In addition, the measurement control section 43 outputs the measurement command to the measurement condition determination section 41. The respective functions of the feature amount computation section 42, the engine speed control section 44, the pump tilting control section 45, and the bleed-off valve control section 46 are similar to those in the second embodiment (Fig. 9), and thus, description thereof is omitted.

The measurement condition determination section 41 receives the measurement command from the measurement control section 43, and determines whether or not the measurement condition of the feature amounts Te, q, and P is established. When determining that the measurement condition is established, the measurement condition determination section 41 instructs the feature amount computation section 42 to compute the feature amounts Te, q, and P, and instructs the feature amount computation section 48 to compute the feature amounts q, Ne, P, and Ab.

The feature amount computation section 48 receives the instruction from the measurement condition determination section 41, and computes the respective representative values of the pump tilting amount q, the engine speed Ne, the pump pressure P, and the bleed-off valve opening area Ab as the feature amounts q, Ne, P, and Ab. The feature amount computation section 48 stores the computed feature amounts q, Ne, P, and Ab together with the clock time information in the storage device 40c, outputs them to the monitor 50 disposed in the cab 110, or the like, and notifies the machine administrator, the service sector, and others, of them through wireless communication or the like.

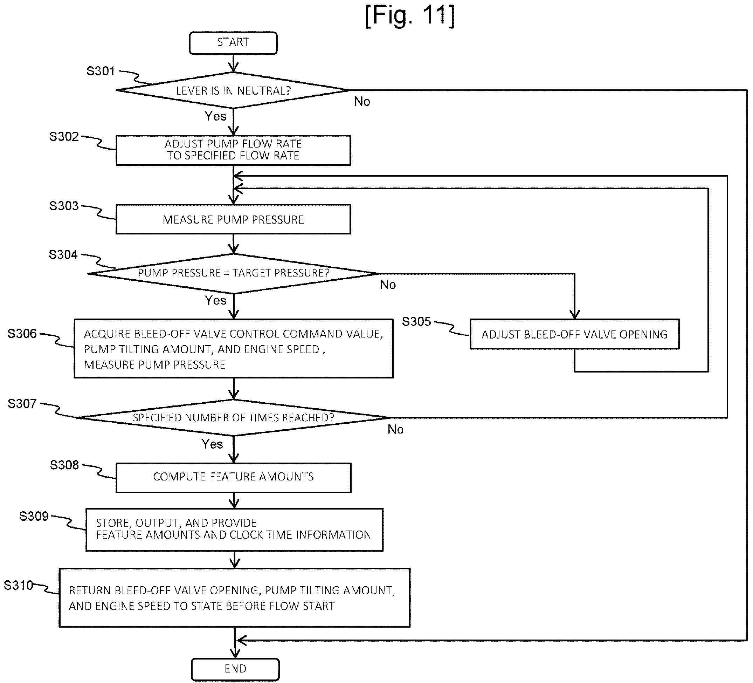

Fig. 11 is a flowchart depicting processing executed by the controller 40 in the third embodiment. In Fig. 11, only measurement processing for the feature amounts q, Ne, P, and Ab relating to the speed conversion efficiency $\eta v$ is depicted, and measurement processing for the feature amounts Te, q, and P relating to the speed conversion efficiency $\eta v$ is omitted. Each step is sequentially described below.

First, the controller 40 determines whether or not the operation lever 51 is in neutral (non-operated state) (step S301).

When the determination result of the step S301 is No, this flow is ended.

When the determination result of the step S301 is Yes, the engine speed Ne and the pump tilting amount q are adjusted to cause the suction flow rate Qin of the hydraulic pump 21a to become a specified flow rate (step S302).

Subsequently to the step S302, the pump pressure P is measured (step S303).

Subsequently to the step S303, the controller 40 determines whether or not the pump pressure P is equal to the target pump pressure Pt (step S304).

When the determination result of the step S304 is No, the bleed-off valve opening area Ab is adjusted (step S305), and the processing is returned to the step S303. In the step S305, specifically, the bleed-off valve opening area Ab is set small when the pump pressure P is lower than the target pump pressure Pt, or the bleed-off valve opening area Ab is set large when the pump pressure P is higher than the target pump pressure Pt.

When the determination result of the step S304 is Yes, the bleed-off valve opening area Ab, the pump tilting amount q, and the engine speed Ne are acquired, and the pump pressure P is measured (step S306).

Subsequently to the step S306, the controller 40 determines whether or not the number of times of execution of the step S304 has reached a specified number of times (step S307). When the determination result of the step S307 is No, the processing is returned to the step S303. The purpose of this determination is to ensure the number of pieces of data for executing moving average processing, filter processing, or the like later in view of the existence of variation and the like in the data acquired or measured in the step S306, and the specified number of times is set depending on the content of the processing and the acquisition rate of data.

When the determination result of the step S307 is Yes, the acquired values of the bleed-off valve opening area Ab, the pump tilting amount q, and the engine speed Ne and the measurement value of the pump pressure P corresponding to the specified number of times are each averaged to be computed as the feature amount (step S308).

Subsequently to the step S308, the feature amounts q, Ne, P, and Ab together with the clock time information are stored in the storage device 40c, and are output to the monitor 50 or the like, and the machine administrator, the service sector, and others, are notified of the feature amounts q, Ne, P, and Ab together with the clock time information through wireless communication or the like (step S309).

Subsequently to the step S309, the bleed-off valve opening area Ab, the pump tilting amount q, and the engine speed Ne are returned to the state before the start of this flow (step S310), and this flow is ended.

(Summarization)

The controller 40 in the third embodiment includes the bleed-off valve 25 capable of adjusting the flow rate of the hydraulic operating fluid returned to the tank 29 after being delivered from the hydraulic pump 21 and the measurement instruction device 52 that instructs the controller 40 to compute the feature amounts Te, q, and P. The controller 40 controls the revolution speed Ne of the prime mover 20 to the predetermined revolution speed Nt, controls the tilting amount q of the hydraulic pump 21 to the predetermined tilting amount qt, and adjusts the opening area Ab of the bleed-off valve 25 so as to cause the delivery pressure P of the hydraulic pump 21 sensed by the pressure sensor 27 to correspond with the predetermined pressure Pt, when an instruction from the measurement instruction device 52 has been input to the controller 40.

According to the third embodiment configured as described above, similarly to the second embodiment, the measurement condition of the feature amounts Te, q, and P can stably be established. Hence, the reliability of diagnosis of the hydraulic pump 21 based on the force conversion efficiency $\eta m$ can be improved.

Further, the controller 40 in the third embodiment computes the feature amounts Te, q, and P relating to the force conversion efficiency $\eta m$ and computes the feature amounts q, Ne, P, and Ab relating to the speed conversion efficiency $\eta v$ that is the efficiency of conversion from the revolution speed Ne of the prime mover 20 to the delivery flow rate Qout of the hydraulic operating fluid of the hydraulic pump 21, in a state in which the controller 40 has controlled the revolution speed Ne of the prime mover 20 to the predetermined revolution speed Nt, has controlled the tilting amount q of the hydraulic pump 21 to the predetermined tilting amount qt, and has adjusted the opening area Ab of the bleed-off valve 25 so as to cause the delivery pressure P of the hydraulic pump 21 sensed by the pressure sensor 27 to correspond with the predetermined pressure Pt. This enables diagnosis of the hydraulic pump 21 based on the speed conversion efficiency $\eta v$.

Moreover, the feature amounts q, Ne, P, and Ab relating to the speed conversion efficiency $\eta v$ in the third embodiment include the tilting amount q of the hydraulic pump 21, the revolution speed Ne of the prime mover 20, the delivery pressure P of the hydraulic pump 21, and the opening area Ab of the bleed-off valve 25. Due to this, diagnosis of the hydraulic pump 21 based on the speed conversion efficiency $\eta v$ is enabled by measuring the tilting amount q of the hydraulic pump 21, the revolution speed Ne of the prime mover 20, the delivery pressure P of the hydraulic pump 21, and the opening area Ab of the bleed-off valve 25.

[Fourth Embodiment]

A fourth embodiment of the present invention is described with focus on a difference from the above-described embodiments. In the first or second embodiment, diagnosis of the hydraulic pump 21 based on the force conversion efficiency $\eta m$ is enabled. In the third embodiment, diagnosis of the hydraulic pump 21 based on the force conversion efficiency $\eta m$ and the speed conversion efficiency $\eta v$ is enabled. However, in such a machine that operates in outdoor spaces and various regions as the construction machine, the feature amounts relating to the force conversion efficiency $\eta m$ and the speed conversion efficiency $\eta v$ vary due to an influence of an external environment. Accordingly, the force conversion efficiency $\eta m$ and the speed conversion efficiency $\eta v$ may not correctly be evaluated. For example, in the hydraulic excavator, it is generally known that the viscosity of the hydraulic operating fluid changes depending on the temperature. When the fluid temperature lowers, the viscosity of the hydraulic operating fluid becomes higher, and loss torque consumed for stirring the hydraulic operating fluid inside the pump increases. Further, a force demanded for pushing out the hydraulic operating fluid to the outside of the pump increases, and the leakage flow rate inside the pump increases. Accordingly, it is envisaged that the force conversion efficiency $\eta m$ and the speed conversion efficiency $\eta v$ vary depending on the use temperature of the hydraulic excavator 100. The present embodiment keeps the reliability of diagnosis of the hydraulic pump 21 based on the force conversion efficiency $\eta m$ and the speed conversion efficiency $\eta v$ by suppressing variation in the force conversion efficiency $\eta m$ and the speed conversion efficiency $\eta v$ due to temperature change in the hydraulic operating fluid.

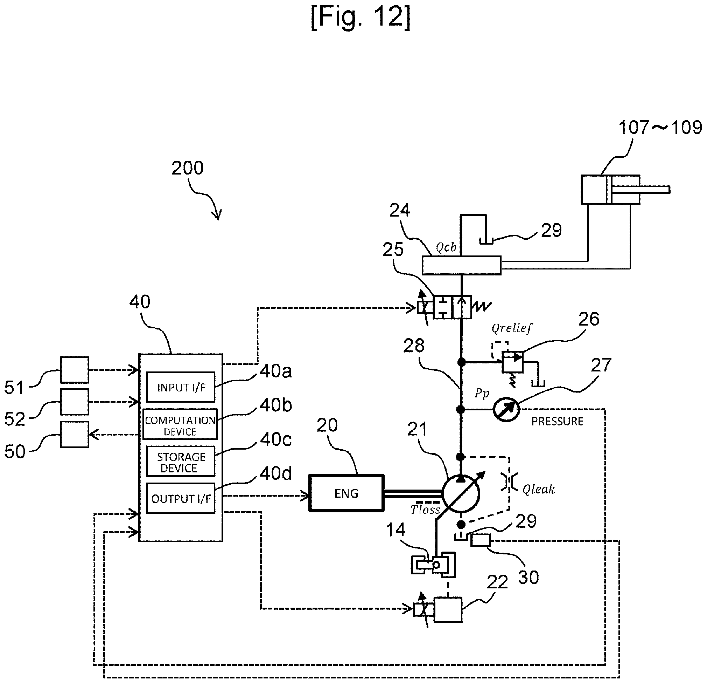

Fig. 12 is a schematic configuration diagram of the hydraulic drive system 200 in the fourth embodiment. The hydraulic drive system 200 in the present embodiment further includes a temperature sensor 30 that can sense the temperature of the hydraulic operating fluid during operation. An output value of the temperature sensor 30 is input to the controller 40. The controller 40 avoids evaluation of the feature amount in a temperature range in which a defect of the hydraulic pump 21 is anticipated by grasping the temperature of the hydraulic operating fluid when the feature amount described in the first to third embodiments is measured.

In general, the temperature range of the hydraulic operating fluid when the hydraulic excavator 100 is used for ordinary work is 30°C to 70°C. Thus, the controller 40 in the present embodiment measures the feature amount when the fluid temperature sensed by the temperature sensor 30 falls within this range, but does not measure the feature amount when the fluid temperature is out of this range. Due to this, the feature amounts relating to the force conversion efficiency ηm and the speed conversion efficiency ηv are measured only when the fluid temperature falls within the ordinary range. Hence, it becomes possible to suppress variation in the force conversion efficiency ηm and the speed conversion efficiency ηv in association with change in the fluid temperature.

(Summarization)

The hydraulic drive system 200 in the fourth embodiment includes the temperature sensor 30 that senses the temperature of the hydraulic operating fluid that circulates through the hydraulic pump 21. The controller 40 stops computation of the feature amounts Te, q, and P relating to the force conversion efficiency ηm and the feature amounts q, Ne, P, and Ab relating to the speed conversion efficiency ηv when the temperature of the hydraulic operating fluid sensed by the temperature sensor 30 is out of the predetermined temperature range.

According to the fourth embodiment configured as described above, the feature amounts Te, q, and P relating to the force conversion efficiency ηm and the feature amounts q, Ne, P, and Ab relating to the speed conversion efficiency ηv are measured only when the temperature of the hydraulic operating fluid falls within the predetermined temperature range. Hence, it becomes possible to suppress variation in the force conversion efficiency ηm or the speed conversion efficiency ηv in association with temperature change in the hydraulic operating fluid.

Although the embodiments of the present invention have been described in detail above, the present invention is not limited to the above-described embodiments, and various modifications are included therein. For example, the above-described embodiments have been explained in detail in order to explain the present invention in an easy-to-understand manner, and the present invention is not necessarily limited to that including all configurations explained. Further, it is also possible to add part of a configuration of a certain embodiment to a configuration of another embodiment. It is also possible to delete part of a configuration of a certain embodiment or replace the part by part of another embodiment.

Description of Reference Signs

| 1: | Casing |
|---|---|
| 1A: | Casing body |
| 1B: | Head casing |
| 1C: | Elongated hole |
| 2: | Rotating shaft |
| 3: | Cylinder block |
| 4: | Cylinder |
| 5: | Piston |
| 6: | Connecting rod |
| 6A: | Spherical portion |
| 7: | Drive disc |
| 8: | Valve plate |
| 8A: | Through-hole |
| 9: | Tilting sliding face |
| 10: | Center shaft |
| 10A: | Spherical portion |
| 11: | Tilting mechanism |
| 12: | Cylinder chamber |
| 12A: | Fluid passing hole |
| 12B: | Fluid passing hole |
| 13A: | Liquid pressure chamber |
| 13B: | Liquid pressure chamber |
| 14: | Servo piston |
| 15: | Swing pin |
| 15A: | Spherical tip portion |
| 16: | Control portion |
| 17: | Feedback pin |
| 20: | Engine (prime mover) |
| 20: | Engine |

21, 21a, 21b:     Hydraulic pump
22:               Solenoid proportional valve
24:               Directional control valve unit
25:               Bleed-off valve
26:               Relief valve
27:               Pressure sensor
28:               Pump delivery hydraulic line
29:               Tank
30:               Temperature sensor
40:               Controller
40a:              Input interface
40b:              Computation device
40c:              Storage device
40d:              Output interface
41:               Measurement condition determination section
42:               Feature amount computation section
43:               Measurement control section
44:               Engine speed control section
45:               Pump tilting control section
46:               Bleed-off valve control section
48:               Feature amount computation section
50:               Monitor
51:               Operation lever
52:               Measurement instruction device
100:              Hydraulic excavator
101:              Track structure
102:              Swing structure
103:              Work device
104:              Boom
105:              Arm
106:              Bucket
107:              Boom cylinder
108:              Arm cylinder
109:              Bucket cylinder
110:              Cab
200:              Hydraulic drive system

**Claims**

1. A hydraulic pump state monitoring device that monitors a state of a variable displacement hydraulic pump that delivers a hydraulic operating fluid with capacity according to a tilting amount by being driven by rotation of a prime mover, the hydraulic pump state monitoring device comprising:

   a controller that acquires information relating to a rotational force of the prime mover, the tilting amount of the hydraulic pump, and delivery pressure of the hydraulic operating fluid concerning the hydraulic pump and has a computation function for monitoring the state of the hydraulic pump,
   wherein the controller is configured to, in a case in which the tilting amount of the hydraulic pump has become a predetermined tilting amount and the delivery pressure of the hydraulic pump has become a predetermined pressure, compute a feature amount relating to force conversion efficiency that is efficiency of conversion from the rotational force of the prime mover to the delivery pressure of the hydraulic operating fluid concerning the hydraulic pump at a time when the delivery pressure of the hydraulic pump has become the predetermined pressure.

2. The hydraulic pump state monitoring device according to claim 1,
   wherein the feature amount relating to the force conversion efficiency includes the rotational force of the prime mover, the tilting amount of the hydraulic pump, and the delivery pressure of the hydraulic pump.

3. A hydraulic drive system comprising:

a prime mover,

a tank that stores a hydraulic operating fluid,

a variable displacement hydraulic pump driven by rotation of the prime mover to suck the hydraulic operating fluid in the tank and deliver the hydraulic operating fluid with capacity according to a tilting amount, and

a controller that acquires information relating to a rotational force of the prime mover, the tilting amount of the hydraulic pump, and delivery pressure of the hydraulic operating fluid concerning the hydraulic pump and controls the tilting amount of the hydraulic pump, wherein

the hydraulic drive system comprises a pressure sensor that senses the delivery pressure of the hydraulic pump, and

the controller is configured to compute a feature amount relating to force conversion efficiency that is efficiency of conversion from the rotational force of the prime mover to the delivery pressure of the hydraulic operating fluid concerning the hydraulic pump, in a case in which the controller has controlled the tilting amount of the hydraulic pump to a predetermined tilting amount and the delivery pressure of the hydraulic pump sensed by the pressure sensor has become a predetermined pressure.

4. The hydraulic drive system according to claim 3, comprising:

a bleed-off valve capable of adjusting a flow rate of the hydraulic operating fluid returned to the tank after being delivered from the hydraulic pump;

a relief valve that restricts the delivery pressure of the hydraulic pump; and

a measurement instruction device that instructs the controller to compute the feature amount,

wherein the predetermined pressure is a set pressure of the relief valve, and

the controller controls revolution speed of the prime mover to a predetermined revolution speed, controls the tilting amount of the hydraulic pump to the predetermined tilting amount, and closes the bleed-off valve, when an instruction from the measurement instruction device has been input to the controller.

5. The hydraulic drive system according to claim 3, comprising:

a bleed-off valve capable of adjusting a flow rate of the hydraulic operating fluid returned to the tank after being delivered from the hydraulic pump; and

a measurement instruction device that instructs the controller to compute the feature amount,

wherein the controller controls revolution speed of the prime mover to a predetermined revolution speed, controls the tilting amount of the hydraulic pump to the predetermined tilting amount, and adjusts an opening area of the bleed-off valve to cause the delivery pressure of the hydraulic pump sensed by the pressure sensor to correspond with the predetermined pressure, when an instruction from the measurement instruction device has been input to the controller.

6. The hydraulic drive system according to claim 5,

wherein the controller is configured to compute the feature amount relating to the force conversion efficiency and compute a feature amount relating to speed conversion efficiency that is efficiency of conversion from input to output of the hydraulic pump, in a state in which the controller has controlled the revolution speed of the prime mover to the predetermined revolution speed, controlled the tilting amount of the hydraulic pump to the predetermined tilting amount, and adjusted the opening area of the bleed-off valve to cause the delivery pressure of the hydraulic pump sensed by the pressure sensor to correspond with the predetermined pressure.

7. The hydraulic drive system according to claim 6,

wherein the feature amount relating to the speed conversion efficiency includes the tilting amount of the hydraulic pump, the revolution speed of the prime mover, the delivery pressure of the hydraulic pump, and the opening area of the bleed-off valve.

8. The hydraulic drive system according to claim 3, comprising a temperature sensor that senses temperature of the hydraulic operating fluid that circulates through the hydraulic pump,

wherein the controller stops computation of the feature amount when the temperature of the hydraulic operating fluid sensed by the temperature sensor is out of a predetermined temperature range.

[Fig. 1]

[Fig. 2]

EP 4 692 545 A1

[Fig. 3]

[Fig. 4]

25

| ENG | Te |
| | Ne |

21

| Pmp | q |
| | P |

40

41

MEASUREMENT
COMMAND

Ne
q
P
Nt
qt
Pt

MEASUREMENT
CONDITION
DETERMINATION
SECTION

42

Te
q
P

FEATURE AMOUNT
COMPUTATION SECTION
(FORCE CONVERSION EFFICIENCY)

FEATURE AMOUNTS,
CLOCK TIME INFORMATION

MONITOR OUTPUT

NOTIFICATION TO
ADMINISTRATOR AND OTHERS

EP 4 692 545 A1

## [Fig. 5]

```
                          ┌──────────┐
                          │  START   │
                          └────┬─────┘
                               │
         ┌─────────────────────┤
         │                     ▼
  S101 ──┐         ╱────────────────────────────╲      No
         └───────▶◀  MEASUREMENT COMMAND INPUT MADE ?  ▶───┐
                  ╲────────────────────────────╱          │
                               │                          │
                              Yes                         │
                               ▼                          │
  S102 ──┐    ┌────────────────────────────────────┐      │
         └───▶│ ACQUIRE ENGINE SPEED AND PUMP       │      │
              │ TILTING AMOUNT, MEASURE PUMP PRESSURE│     │
              └────────────────┬───────────────────┘      │
                               │                          │
  S103 ──┐                     ▼                          │
         └──────▶  ╱────────────────────────────╲         │
          No  ◀───◀  MEASUREMENT CONDITION ESTABLISHED?    │
                    ╲────────────────────────────╱         │
                               │                          │
                              Yes                         │
                               ▼                          │
  S104 ──┐    ┌────────────────────────────────────┐      │
         └───▶│ ACQUIRE PUMP TILTING AMOUNT AND     │      │
              │ ENGINE TORQUE VALUE, MEASURE PUMP    │      │
              │ PRESSURE                             │      │
              └────────────────┬───────────────────┘      │
                               │                          │
  S105 ──┐                     ▼                          │
         └───▶┌────────────────────────────────────┐      │
              │     COMPUTE FEATURE AMOUNTS          │      │
              └────────────────┬───────────────────┘      │
                               │                          │
  S106 ──┐                     ▼                          │
         └───▶┌────────────────────────────────────┐      │
              │ STORE, OUTPUT, AND PROVIDE          │      │
              │ FEATURE AMOUNTS AND CLOCK TIME       │      │
              │ INFORMATION                          │      │
              └────────────────┬───────────────────┘      │
                               │◀─────────────────────────┘
                               ▼
                          ┌──────────┐
                          │   END    │
                          └──────────┘
```

EP 4 692 545 A1

[Fig. 6]

# [Fig. 7]

SATELLITE

ANALYSIS SERVER

CONSTRUCTION
MACHINE

FEATURE AMOUNTS,
CLOCK TIME INFORMATION

FEATURE AMOUNTS,
CLOCK TIME INFORMATION

ABSOLUTE VALUE
EVALUATION

ABNOMALY
DETERMINATION

FEATURE AMOUNT

TIME

DETERMINATION
THRESHOLD

RELATIVE VALUE
EVALUATION

OUTLIER

OUTLIER

AVERAGE

DEFECT

DATA OF OTHER MACHINES

EP 4 692 545 A1

[Fig. 8]

EP 4 692 545 A1

[Fig. 9]

EP 4 692 545 A1

[Fig. 10]

[Fig. 11]

EP 4 692 545 A1

[Fig. 12]

EP 4 692 545 A1

## INTERNATIONAL SEARCH REPORT

| International application No. |
|---|
| **PCT/JP2023/043889** |

| A. | CLASSIFICATION OF SUBJECT MATTER |
|---|---|

*F04B 49/10*(2006.01)i; *F04B 51/00*(2006.01)i
FI:  F04B49/10 311; F04B51/00

According to International Patent Classification (IPC) or to both national classification and IPC

| B. | FIELDS SEARCHED |
|---|---|

Minimum documentation searched (classification system followed by classification symbols)

F04B49/10; F04B51/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2021-511461 A (HANON SYSTEMS) 06 May 2021 (2021-05-06) claims | 1-3, 8 |
| A | | 4-7 |
| A | JP 2021-63524 A (HITACHI CONSTRUCTION MACHINERY CO., LTD.) 22 April 2021 (2021-04-22) | 1-8 |
| A | JP 2010-269652 A (SANDEN CORP.) 02 December 2010 (2010-12-02) | 1-8 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 February 2024** | **27 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

INTERNATIONAL SEARCH REPORT
Information on patent family members

International application No.

**PCT/JP2023/043889**

| Patent document cited in search report | | | Publication date (day/month/year) | Patent family member(s) | | | Publication date (day/month/year) |
|---|---|---|---|---|---|---|---|
| JP | 2021-511461 | A | 06 May 2021 | US<br>claims<br>WO<br>DE<br>KR<br>CN | 2021/0033080<br><br>2019/146965<br>112019000570<br>10-2019-0092234<br>111801496 | A1<br><br>A1<br>T5<br>A<br>A | |
| JP | 2021-63524 | A | 22 April 2021 | WO | 2021/070736 | A1 | |
| JP | 2010-269652 | A | 02 December 2010 | WO<br>EP | 2010/134336<br>2420399 | A1<br>A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021095861 A